# EUROPÄISCHE PATENTSCHRIFT

(11) **EP 2 467 269 B1**
(45) Veröffentlichungstag und Bekanntmachung des Hinweises auf die Patenterteilung: **08.05.2013**
(21) Anmeldenummer: 10728217.0
(22) Anmeldetag: 29.06.2010
(51) Int. Cl.: B60C 11/13

(54) **FAHRZEUGLUFTREIFEN**
VEHICLE PNEUMATIC TIRES
PNEUMATIQUE POUR VÉHICULE

(30) Priorität: 17.08.2009 DE 102009026384
(43) Veröffentlichungstag der Anmeldung: 27.06.2012
(73) Patentinhaber: Continental Reifen Deutschland GmbH, 30165 Hannover (DE)
(72) Erfinder: WEBER, Christian, 30826 Garbsen (DE); ACKERMANN, Lutz, 38539 Mueden (DE); LERNER, Christian, 30169 Hannover (DE)
(74) Vertreter: Finger, Karsten
(86) Internationale Anmeldenummer: PCT/EP2010/059168
(87) Internationale Veröffentlichungsnummer: WO 2011/020639

(56) Entgegenhaltungen:
- JP-A- 2 114 005
- JP-A- 4 274 906
- US-A- 5 180 453
- US-A- 5 445 201
- US-A1- 2008 073 012

## Beschreibung

Die Erfindung betrifft einen Fahrzeugluftreifen mit einem Laufstreifen mit einer Anzahl von in Umfangsrichtung umlaufenden Umfangsrillen.

Ein Fahrzeugluftreifen mit derart ausgeführten Umfangsrillen ist beispielsweise aus der US-A-2008/073012 bekannt.

Weiterhin ist aus der US-A-5,450,885 ein Fahrzeugluftreifen bekannt dessen Umfangsgrillen mit Rillenflanken versehen, sind, welche im Querschnitt bogenförmig gekrümmt sind, derart, dass sich ihr Neigungswinkel relativ zur radialen Richtung von der Laufstreifenoberfläche in Richtung Nutgrund kontinuierlich verringert. Ein Reifen mit derart ausgeführten Umfangsnuten soll im Betrieb besonders geräuscharm sein, insbesondere soll in diesen Umfangsrillen das Auftreten von Luftresonanzen verhindert sein. Aus der EP-B-1106395 ist ein Reifen bekannt, welcher einen Laufflächenabschnitt aufweist, in welchem eine Formteilungslinie durch eine einfach geteilte Form auf oder nahe dem Reifenäquator verläuft, der einen rechten Teil des Laufflächenabschnitts auf einer Seite der Formteilungslinie und einen linken Teil auf der anderen Seite definiert. Der Laufflächenabschnitt ist in zumindest einem zentralen Teil mit Laufflächenrillen versehen, die jeweils eine rechte Rillenwand und eine linke Rillenwand aufweisen. Im rechten Teil sind die rechten Rillenwände zumindest teilweise mit einem geneigten Teil versehen, der von der Lauffläche in Richtung des Rillengrundes verläuft, während er nach links geneigt ist, wobei die linken Rillenwände weniger geneigt sind als der geneigte Teil der entsprechenden gegenüberliegenden rechten Rillenwände. Im linken Teil sind die linken Rillenwände zumindest teilweise mit einem geneigten Teil versehen, der von der Lauffläche in Richtung des Rillengrundes verläuft, während er nach rechts geneigt ist, wobei die rechten Rillenwände weniger geneigt sind als der geneigte Teil der entsprechenden gegenüberliegenden linken Rillenwände. Diese besondere Ausführung der Umfangsrillen ermöglicht es, bei der Verwendung zweigeteilter Vulkanisationsforrnen die Ausformbarkeit des fertig vulkanisierten Reifens wesentlich zu erleichtern.

Üblicherweise werden die Umfangsrillen in Laufstreifen von Fahrzeugluftreifen mit Rillenflanken versehen, die, ausgehend vom Nutgrund, unter einem konstanten Winkel in der Größenordnung von 5° bis 10° zur radialen Richtung geneigt verlaufen. Der Nutgrund herkömmlich ausgeführter Umfangsrillen, vor Allem in Laufstreifen von Schwerlastfahrzeugen und Transportern, ist insbesondere in der ersten Hälfte der Lebensdauer des Reifens rissanfällig, wodurch die Haltbarkeit des Reifens vermindert wird. Eine wesentlich größere Neigung der Rillenflanken relativ zur radialen Richtung würde zwar die Rissanfälligkeit verringern, hätte jedoch den Nachteil, die Stabilität und Steifigkeit der Profilelemente zu reduzieren und damit einen ungleichförmigen Abrieb zu fordern. Durch das geringere Laufstreifenvolumen wird ferner das Abriebsvolumen reduziert.

Die US 5 180 453 A, JP 4 274 906 A und US 5 445 201 A offenbaren bekannte Reifenprofile mit Stegen in Rillen.

Der Erfindung liegt die Aufgabe zugrunde, bei einem Reifen der eingangs genannten Art die Umfangsrille derart zu gestalten, dass das Auftreten von Rissen am Grund von Umfangsrillen verhindert wird und gleichzeitig die Haltbarkeit des Reifens und der Abrieb des Laufstreifens nicht beeinträchtigt werden.

Gelöst wird die gestellte Aufgabe mit den Merkmalen gemäß Anspruch 1.

Die Rissanfälligkeit am Rillengrund wird in Kombination bzw. in Synergie mit den o. g. Merkmalen weiterhin dadurch signifikant reduziert, dass am Rillengrund ein zusätzlicher Steg angeordnet ist. Die beiden Rillenflanken stützen sich beim Einlaufen in die Bodenaufstandsfläche an dem in der Mitte liegenden Steg seitlich ab. Dadurch werden u. a. Verschiebungen und Deformationen in Umfangsrichtung durch den Kontakt des Steges mit den Rillenflanken reduziert. Beide Effekte führen zu einer wesentlichen Entlastung des Rillengrundes, wie u. a. anhand von Straßenversuchen nachgewiesen werden konnte.

Es ist vorgesehen, dass die Stegoberkante unterhalb der Profiloberfläche angeordnet ist und die Höhe des Steges in einem Bereich zwischen 40 und 85 % der Profiltiefe des Fahrzeugreifens liegt.

Der in der Mitte liegende Steg darf eine bestimmte Höhe weder unter- bzw. überschreiten. Die Höhe des Steges muss derart gering sein, dass im frühen Reifenleben, wenn die Sensibilität gegenüber Rissen im Profilgrund am höchsten ist, der Steg keinen Kontakt mit der Straße hat. Daher darf die Steghöhe maximal 85 % der Profiltiefe betragen. Wenn der Steg mit der Straße in Kontakt käme, so wäre die Öffnung zwischen dem Steg und der Rillenflanke als eigenständige Rille mit einem geringen Radius und geringer Weite anzusehen. Eine derartige Rille wäre empfindlich gegenüber einer Rissentstehung am Rillengrund, womit eine solche Situation unbedingt vermieden werden sollte. Auf der anderen Seite muss der Steg eine Mindesthöhe von ca. 40 % der Profiltiefe besitzen, damit sich beide Rillenflanken an dem in der Mitte liegenden Steg effektiv abstützen können.

Es ist vorgesehen, dass die Stegflanken des Steges zwei Stegflankenabschnitte aufweist, von welchen der untere, an den Rillengrund anschließende Stegflankenabschnitt im Wesentlichen in radialer Richtung verläuft und der obere Stegflankenabschnitt nach axial innen abgewinkelt verläuft. Durch diese Steggeometrie können sich die Rillenflanken effektiv an dem Steg abstützen, wodurch die Rissanfälligkeit am Rillengrund erheblich reduziert wird.

Es ist vorgesehen, dass die Stegbreite am Rillengrund des Steges zwischen 5 und 7 mm beträgt, wobei die Profilgrundbreite der Umfangsrille zwischen 9 und 11 mm beträgt. Diese geometrischen Abmessungen der Stegbreite und der Profilgrundbreite reduzieren die Rissanfälligkeit am Rillengrund. Der abgerundete Konturverlauf trägt zu einer Reduzierung der Rissanfälligkeit am Rillengrund bei. Die auftretenden Spannungen und Deformationen am Rillengrund werden auf diese Weise effektiv minimiert.

In einer weiteren vorteilhaften Weiterbildung der Erfindung ist vorgesehen, dass der Übergangsbereich zwischen dem unteren Rillenflankenabschnitt und dem unteren Stegflankenabschnitt einen ausgeprägten abgerundeten Konturverlauf aufweist. Dadurch wird die Rissanfälligkeit am Rillengrund effektiv reduziert.

Es ist vorgesehen, dass die Breite der Umfangsrille an der Profiloberfläche im Bereich zwischen 24 und 28 mm beträgt.

In einer weiteren vorteilhaften Weiterbildung der Erfindung ist vorgesehen, dass der Übergang vom unteren zum oberen Rillenflankenabschnitt im Bereich zwischen 40 und 85 % der Profiltiefe des Fahrzeugreifens liegt. Dadurch können sich die Flankenabschnitte der Umfangsrille effektiv am mittleren Steg abstützen, wodurch die Rissanfälligkeit am Rillengrund reduziert wird.

In einer weiteren vorteilhaften Weiterbildung der Erfindung ist vorgesehen, dass der Übergang vom unteren zum oberen Rillenflankenabschnitt im Wesentlichen auf der gleichen Höhe liegt wie die Oberkante des Steges.

Diese alternativen Ausführungsformen und Weiterbildungen haben erhebliche positive Auswirkungen auf das Ausmaß der Entlastung des Rillengrundes.

Die Rissanfälligkeit, insb. im Rillengrund wird durch die Weiterbildungen wesentlich reduziert.

Weitere Merkmale, Vorteile und Einzelheiten der Erfindung werden nun anhand der Zeichnung, die schematisch ein Ausführungsbeispiel darstellt, näher beschrieben. Dabei zeigen
Fig. 1 einen Querschnitt durch einen Teilbereich eines Laufstreifens eines Fahrzeugluftreifens,
Fig. 2 einen Rillenquerschnitt in vergrößerter Darstellung,
Fig. 3 einen Rillenquerschnitt in vergrößerter Darstellung beim Einlauf in die Bodenaufstandsfläche,
Fig. 4 weitere Ausführungsformen der erfindungsgemäßen Umfangsrille.

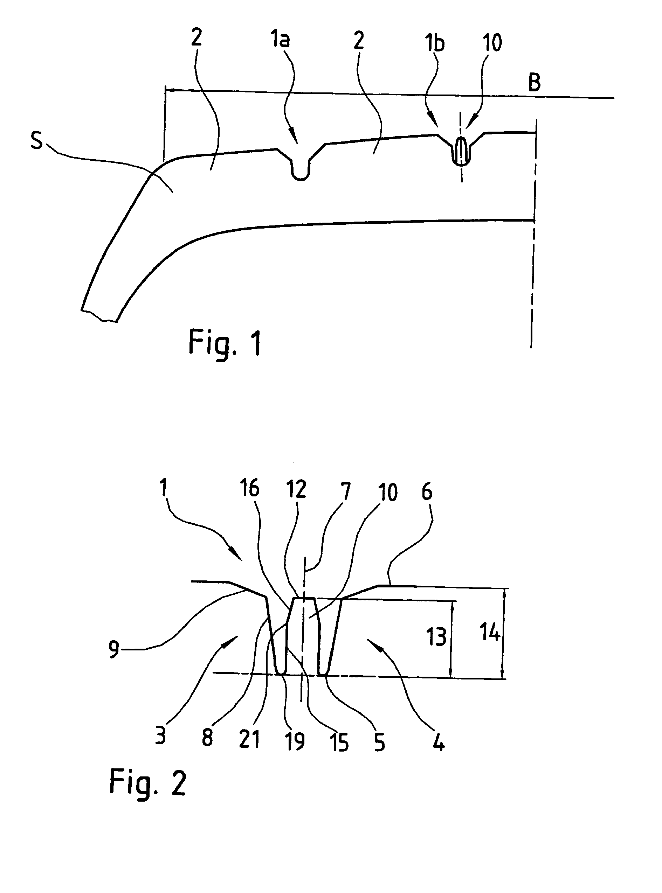

Fig. 1 zeigt einen Querschnitt durch einen Teilbereich eines Laufstreifens für einen Fahrzeugluftreifen, wobei der Laufstreifen eine Anzahl von breiten und auf Profiltiefe ausgeführten sowie in Umfangsrichtung umlaufenden Umfangsrillen 1 aufweist. In Fig. 1 sind zwei dieser Umfangsrillen 1 dargestellt, welche Profilrippen oder Profilblockreihen 2 begrenzen bzw. voneinander trennen. In der Mitte der Umfangsrille ist der erfindungsgemäße Steg 10 angeordnet, an dem sich die Rillenflanken beim Einlauf in die Bodenaufstandsfläche abstützen können. Der Steg 10 weist in Umfangsrichtung eine Vielzahl von Unterbrechungen auf, die bis zum Profilgrund reichen können. Mit den Unterbrechungen bzw. Aussparungen wird eine optimierte Wasserableitung erreicht. In der Figur 1 ist der Steg 10 als Ausführungsbeispiel in der Umfangsrille 1b angeordnet. Der Steg 10 sollte jedoch vorzugsweise in der Umfangsrille 1a angeordnet werden, da vor allem bei den äußeren Rillen die Rissanfälligkeit im Profilgrund größer ist.

Fig. 2 zeigt einen Querschnitt durch die Umfangsrille 1b der Fig. 1. Die Umfangsrille 1 weist eine Rillenflanke 3, eine zweite, dieser gegenüberliegende Rillenflanke 4 sowie einen Rillengrund 5 auf.

Die Rillenflanken 3 und 4 setzen sich aus einem unteren Rillenflankenabschnitt 8 und einen oberen Rillenflankenabschnitt 9 zusammen. Der untere Rillenflankenabschnitt 8 verläuft im Wesentlichen in radialer Richtung 7, wobei sich daran der obere Rillenflankenabschnitt 9 abgewinkelt fortsetzt. Der obere abgewinkelte Rillenflankenabschnitt 9 hat zur Folge, dass die Umfangsrille im oberen Bereich eine wesentliche Verbreiterung aufweist gegenüber dem Rillengrund 5. In der Mitte zwischen den beiden Rillenflanken 3 und 4 ist der erfindungsgemäße Steg 10 angeordnet. Die Steghöhe 13 mit der Stegoberkante 12 liegt unterhalb der Profiloberfläche 6. Die Steghöhe 13 liegt im Bereich zwischen 40 und 85 % der Profiltiefe 14. Der Steg 10 besitzt an seinen beiden Seiten einen unteren Stegflankenabschnitt 15 und einen oberen Stegflankenabschnitt 16, wobei der obere Stegflankenabschnitt 16 leicht abgewinkelt verläuft. Der Übergangsbereich zwischen dem unteren Stegflankenabschnitt 15 und dem unteren Rillenflankenabschnitt 8 weist einen abgerundeten Konturverlauf 19 auf.

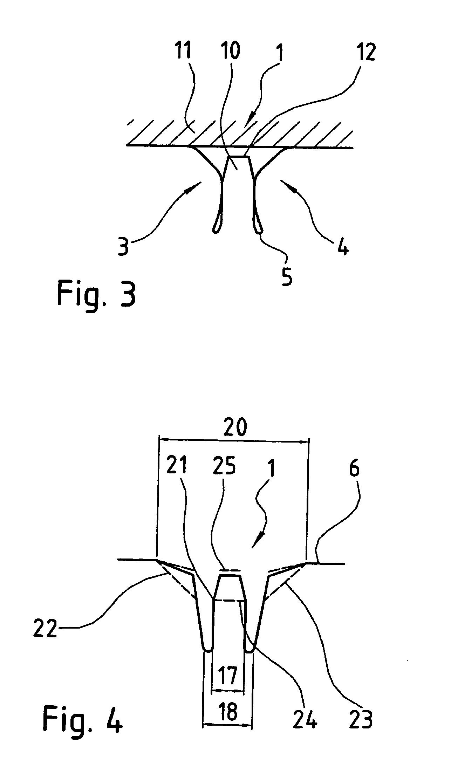

Die Figur 3 zeigt die Umfangsrille 1 beim Einlauf in die Bodenaufstandsfläche, wobei in der Figur die Fahrbahnoberfläche 11 dargestellt ist. Beide Rillenflanken 3 und 4 der Umfangsrille 1 stützen sich seitlich an dem mittleren Steg 10 ab. Wesentlich ist dabei, dass die Stegoberkante 12 nicht in Kontakt mit der Fahrbahnoberfläche 11 tritt. Durch das seitliche Abstützen der Rillenflanken 3 und 4 wird die Rissanfälligkeit im Rillengrund 5 erheblich reduziert.

Die Figur 4 zeigt verschiedene Ausführungsformen der erfindungsgemäßen Umfangsrille 1. Die Stegbreite 17 am Rillengrund beträgt zwischen 5 und 7 mm, wobei die Profilgrundbreite 18 der Umfangsrille zwischen 9 und 11 mm beträgt. Die Breite 20 der Umfangsrille an der Profiloberfläche 6 beträgt zwischen 24 und 28 mm. Die gestrichelte Linie 22 und 23 zeigen alternative Konturverläufe des oberen Rillenflankenabschnittes. Diese können demnach auch in einem steileren Winkel verlaufen als das bei dem Ausführungsbeispiel in Figur 2 der Fall ist. Die minimale Stegoberkante zeigt die gestrichelte Linie 24, wohingegen die maximale Stegoberkante mit der gestrichelten Linie 25 angezeigt wird.

Umfangsrillen mit erfindungsgemäß ausgeführten Rillenflanken sind vor Allem in Laufstreifen von Schwerlastfahrzeugen oder Transportern von besonderem Vorteil. Gerade bei diesen Reifentypen ist der Rillengrund von herkömmlich ausgeführten Umfangsrillen rissanfällig, insbesondere in der ersten Hälfte der Lebensdauer des Reifens. Durch eine erfindungsgemäße Ausführung zumindest einer der beiden Rillenflanken einer Umfangsrille wird der Rillengrund, insbesondere durch die relativ große Breite der Rille an der Laufstreifenoberfläche, entlastet. Mit fortschreitendem Abrieb sinkt die Wahrscheinlichkeit des Auftretens von Rissen am Rillengrund. Der nun maßgebliche Teil der Umfangsrillen sollte den Laufstreifen stabilisieren, um einen gleichmäßigen Abrieb zu gewährleisten. Dies wird bei der erfindungsgemäß ausgeführten Umfangsrillen gewährleistet.

### Bezugszeichenliste

| | |
|---|---|
| 1 ........ | Umfangsrille |
| 2 ........ | Rippe/Blockreihe |
| 3 ....... | Rillenflanken |
| 4 ........ | Rillenflanken |
| 5 ........ | Rillengrund |
| 6 ........ | Profiloberfläche |
| 7 ........ | radiale Richtung |
| 8 ........ | unterer Rillenflankenabschnitt |
| 9 ........ | oberer Rillenflankenabschnitt |
| 10 ...... | Steg |
| 11 ...... | Bodenaufstandsfläche bzw. Fahrbahnoberfläche |
| 12 ...... | Stegoberkante |
| 13 ...... | Steghöhe |
| 14 ...... | Profiltiefe |
| 15 ...... | unterer Stegflankenabschnitt |
| 16 ...... | oberer Stegflankenabschnitt |
| 17 ...... | Stegbreite |
| 18 ...... | Profilgrundbreite |
| 19 ...... | Abgerundeter Konturverlauf |
| 20 ...... | Breite der Umfangsrille an der Profiloberfläche |
| 21 ...... | Übergang vom unteren zum oberen Rillenflankenabschnitt |
| 22 ...... | alternativer Konturverläuf des oberen Rillenflankenabschnittes |
| 23 ...... | alternativer Konturverläuf des oberen Rillenflankenabschnittes |
| 24 ...... | minimale Stegoberkante |
| 25 ...... | maximale Stegoberkante |

## Patentansprüche

1. Fahrzeugluftreifen mit einem Laufstreifen mit einer Anzahl von in Umfangsrichtung umlaufenden Umfangsrillen (1) mit jeweils zwei Rillenflanken (3, 4), welche Profilelemente, wie Blockreihen oder Profilrippen (2), von einander trennen,
wobei zumindest eine Umfangsrille (1, 1a), zumindest innerhalb von Umfangsabschnitten, an der Profiloberfläche (6) eine wesentlich größere Breite aufweist als im Bereich des Rillengrundes (5) und zumindest eine Rillenflanke (3, 4) aufweist, deren Neigungswinkel gegenüber der radialen Richtung (7) des Fahrzeugluftreifens nach außen geneigt ist,
zu mindestens eine der Rillenflanken (3, 4) aus zwei Rillenflankenabschnitten (8, 9) zusammensetzt, von welchen der untere, an den Rillengrund anschließende Rillenflankenabschnitt (8) im Wesentlichen in radialer Richtung (7) verläuft und der obere Rillenflankenabschnitt (9) nach axial außen abgewinkelt verläuft, wodurch eine wesentliche Verbreiterung der Umfangsrille (1) zur Profiloberfläche (6) gegenüber dem Rillengrund (5) erzielt wird,
wobei am Rillengrund (5) ein in Umfangsrichtung verlaufender Steg (10) angeordnet ist und sich die Rillenflanken (3) in einem Teilbereich beim Einlaufen des Fahrzeugluftreifens in die Bodenaufstandsfläche (11) an dem Steg (10) abstützen, wodurch eine Spannungsreduzierung des Gummimaterials am Rillengrund (5) erreicht wird,
wobei die Stegoberkante (12) unterhalb der Profiloberfläche (6) angeordnet ist, **dadurch gekennzeichnet, dass**
die Höhe (13) des Steges (10) in einem Bereich zwischen 40 und 85 % der Profiltiefe (14) des Fahrzeugreifens liegt,
wobei die Stegflanken des Steges (10) zwei Stegflankenabschnitte (15, 16) aufweist, von welchen der untere, an den Rillengrund anschließende Stegflankenabschnitt (15) im Wesentlichen in radialer Richtung (7) verläuft und der obere Stegflankenabschnitt (16) nach axial innen abgewinkelt verläuft, wobei die Stegbreite (17) am Rillengrund (5) des Steges (10) zwischen 4 und 9 mm beträgt, wobei die Profilgrundbreite (18) der Umfangsrille (1) zwischen 8 und 14 mm beträgt,
wobei die Breite der Umfangsrille (20) an der Profiloberfläche (6) im Bereich zwischen 18 und 32 mm, bevorzugt zwischen 22 und 28 mm, beträgt.

2. Fahrzeugluftreifen nach Anspruch 1,
**dadurch gekennzeichnet, dass**
der Übergangsbereich zwischen dem unteren Rillenflankenabschnitt (8) und dem unteren Stegflankenabschnitt (15) einen ausgeprägten abgerundeten Konturverlauf (19) aufweist.

3. Fahrzeugluftreifen nach einem der vorhergehenden Ansprüche,
**dadurch gekennzeichnet, dass**
der Übergang (21) vom unteren zum oberen Rillenflankenabschnitt (9) im Bereich zwischen 40 und 85 % der Profiltiefe (14) des Fahrzeugreifens liegt.

4. Fahrzeugluftreifen nach einem der vorhergehenden Ansprüche,
**dadurch gekennzeichnet, dass**
der Übergang (21) vom unteren zum oberen Rillenflankenabschnitt (9) im Wesentlichen auf der gleichen Höhe liegt wie die Oberkante (12) des Steges (10).

5. Fahrzeugluftreifen nach einem der vorhergehenden Ansprüche,
**dadurch gekennzeichnet, dass**
der Steg (10) in Umfangsrichtung des Fahrzeugreifens eine Vielzahl von Unterbrechungen aufweist, die bis zum Profilgrund reichen können.

## Claims

1. A pneumatic vehicle tyre having a tread with a number of circumferential grooves (1) which run around in the circumferential direction and each have two groove flanks (3, 4) which separate profile elements, such as block rows or profile ribs (2), from one another, wherein at least one circumferential groove (1, la) has, at least within circumferential portions, a considerably greater width on the profile surface (6) than in the region of the groove base (5) and has at least one groove flank (3, 4) whose angle of inclination is inclined outwardly with respect to the radial direction (7) of the pneumatic vehicle tyre, at least one of the groove flanks (3, 4) is composed of two groove flank portions (8, 9), of which the lower groove flank portion (8) adjoining the groove base extends substantially in the radial direction (7) and the upper groove flank portion (9) extends in an angled manner axially outwardly, with the result that a substantial widening of the circumferential groove (1) to the profile surface (6) with respect to the groove base (5) is achieved, wherein a web (10) extending in the circumferential direction is arranged on the groove base (5) and the groove flanks (3) are supported in a subregion on the web (10) when the pneumatic vehicle tyre enters the ground contact area (11), with the result that a stress reduction of the rubber material at the groove base (5) is achieved, wherein the web upper edge (12) is arranged below the profile surface (6), **characterized in that** the height (13) of the web (10) lies in a range between 40 and 85% of the profile depth (14) of the vehicle tyre, wherein the web flanks of the web (10) have two web flank portions (15, 16), of which the lower web flank portion (15) adjoining the groove base extends substantially in the radial direction (7) and the upper web flank portion (16) extends in an angled manner axially inwardly, wherein the web width (17) at the groove base (5) of the web (10) is between 4 and 9 mm, wherein the profile base width (18) of the circumferential groove (1) is between 8 and 14 mm, wherein the width of the circumferential groove (20) on the profile surface (6) is in the range between 18 and 32 mm, preferably between 22 and 28 mm.

2. Pneumatic vehicle tyre according to Claim 1, **characterized in that** the transition region between the lower groove flank portion (8) and the lower web flank portion (15) has a pronounced rounded contour (19).

3. Pneumatic vehicle tyre according to one of the preceding claims, **characterized in that** the transition (21) from the lower to the upper groove flank portion (9) lies in the range between 40 and 85% of the profile depth (14) of the vehicle tyre.

4. Pneumatic vehicle tyre according to one of the preceding claims, **characterized in that** the transition (21) from the lower to the upper groove flank portion (9) lies substantially at the same height as the upper edge (12) of the web (10).

5. Pneumatic vehicle tyre according to one of the preceding claims, **characterized in that** the web (10) has, in the circumferential direction of the vehicle tyre, a plurality of interruptions which can extend as far as the profile base.

## Revendications

1. Pneumatique pour véhicule comprenant une bande de roulement dotée d'un certain nombre de rainures périphériques (1) s'étendant dans la direction périphérique pourvues respectivement de deux flancs de rainure (3, 4) qui séparent les uns des autres des éléments profilés tels que des rangées de blocs ou des nervures profilées (2),
au moins une rainure périphérique (1, la) présentant, au moins à l'intérieur de sections périphériques, une largeur considérablement plus grande au niveau de la surface du profil (6) que dans la région du fond de rainure (5), et comprenant au moins un flanc de rainure (3, 4) dont l'angle d'inclinaison par rapport à la direction radiale (7) du pneumatique pour véhicule est incliné vers l'extérieur,
au moins l'un des flancs de rainure (3, 4) étant composé de deux sections de flanc de rainure (8, 9), parmi lesquelles la section inférieure de flanc de rainure (8), se raccordant au fond de rainure, s'étend essentiellement dans la direction radiale (7) et la section supérieure de flanc de rainure (9) s'étend de manière courbée axialement vers l'extérieur, de sorte qu'un élargissement considérable de la rainure périphérique (1) en direction de la surface du profil (6) par rapport au fond de rainure (5) soit obtenu,
une nervure (10) s'étendant dans la direction périphérique étant disposée sur le fond de rainure (5), et les flancs de rainure (3), dans une région partielle, s'appuyant contre la nervure (10) lorsque le pneumatique pour véhicule rencontre la surface d'appui au sol, de sorte qu'une réduction de contrainte du matériau de caoutchouc au fond de la rainure (5) soit obtenue,
l'arête supérieure de nervure (12) étant disposée en dessous de la surface du profil (6), **caractérisé en ce que**
la hauteur (13) de la nervure (10) se situe dans une plage entre 40 et 85 % de la profondeur de profil (14) du pneumatique pour véhicule,
les flancs de nervure de la nervure (10) comprenant deux sections de flanc de nervure (15, 16), parmi lesquelles la section inférieure de flanc de nervure (15), se raccordant au fond de rainure, s'étend essentiellement dans la direction radiale (7) et la section supérieure de flanc de nervure (16) s'étend de manière courbée axialement vers l'intérieur,
la largeur de nervure (17) au niveau du fond de rainure (5) de la nervure (10) valant entre 4 et 9 mm, la largeur de fond de profil (18) de la rainure périphérique (1) valant entre 8 et 14 mm, la largeur de la rainure périphérique (20) au niveau de la surface du profil (6) se situant dans la plage entre 18 et 32 mm, de préférence entre 22 et 28 mm.

2. Pneumatique pour véhicule selon la revendication 1,
**caractérisé en ce que**
la région de transition entre la section inférieure de flanc de rainure (8) et la section inférieure de flanc de nervure (15) présente une allure de contour (19) arrondie marquée.

3. Pneumatique pour véhicule selon l'une quelconque des revendications précédentes,
**caractérisé en ce que**
la transition (21) de la section inférieure de flanc de rainure à la section supérieure de flanc de rainure (9) se situe dans la plage entre 40 et 85 % de la profondeur de profil (14) du pneumatique pour véhicule.

4. Pneumatique pour véhicule selon l'une quelconque des revendications précédentes,
**caractérisé en ce que**
la transition (21) de la section inférieure de flanc de rainure à la section supérieure de flanc de rainure (9) se situe essentiellement à la même hauteur que l'arête supérieure (12) de la nervure (10) .

5. Pneumatique pour véhicule selon l'une quelconque des revendications précédentes,
**caractérisé en ce que**
la nervure (10) présente, dans la direction périphérique du pneumatique pour véhicule, une pluralité d'interruptions qui peuvent s'étendre jusqu'au fond du profil.
